# EUROPEAN PATENT APPLICATION

(11) **EP 4 293 806 A1**
(43) Date of publication of application: **20.12.2023**
(21) Application number: 22917734.0
(22) Date of filing: 05.01.2022
(51) Int. Cl.: H01M 50/289, H01M 50/264, H01M 50/258

(54) **BATTERY, ELECTRICAL DEVICE, AND METHOD FOR MANUFACTURING BATTERY**

(71) Applicant: Contemporary Amperex Technology Co., Limited, Ningde, Fujian 352100 (CN)
(72) Inventor: WU, Linshan, Ningde, Fujian 352100 (CN)
(74) Representative: Rowlands, Stuart Michael
(86) International application number: PCT/CN2022/070304
(87) International publication number: WO 2023/130257

(57) **Abstract**

The present application provides a battery, an electrical device, and a method for manufacturing the battery. The battery comprises: an accommodating box, comprising a box body, a box cover, and a box bottom, the box cover and the box bottom being connected to two opposite ends of the box body in a first direction, the box cover being detachably arranged, a cavity being formed in the box body, and a supporting part being arranged on the box body; and a battery module, arranged in the cavity and comprising an accommodating member and at least two battery cells, the at least two battery cells being fixed in the accommodating member, a connecting part being arranged on the accommodating member, and the connecting part pressing against the surface of the supporting part facing the box cover and being supported by the supporting part and fixedly connected to the supporting part so as to support and fix the battery module by the box body. On this basis, the convenience of battery disassembly can be effectively improved.

## Description

### TECHNICAL FIELD

The present application relates to a battery filed, and more particularly to a battery, an electrical device, and a manufacturing method for a battery.

### BACKGROUND

Saving energy and reducing emissions is key to the sustainable development of the automobile industry. In this situation, electric vehicles become an important part of the sustainable development of the automobile industry because of their advantages of energy saving and environmental protection. Battery technology is an important factor for the development of electric vehicles.

In the development of battery technology, how to disassemble the battery conveniently has always been a difficult problem.

### SUMMARY

The present application provides a battery, an electrical device, and a manufacturing method for a battery, to improve the convenience of battery disassembly.

In order to achieve above object, the battery provided in the present application includes: an accommodating box and a battery module;
the accommodating box includes: a box body, a box cap, and a box bottom; the box cap and the box bottom are connected with two opposite ends along a first direction of the box body, the box cap is detachably arranged, a cavity is provided in the box body, and the box body is provided with a support portion; and
the battery module is provided in the cavity and includes an accommodating member and at least two battery cells fixed in the accommodating member, the accommodating member is provided with a connecting portion, the connecting portion is pressed onto a surface of the support portion facing the box cap and is supported by the support portion, and is fixedly connected with the support portion, to realize supporting and fixing of the box body to the battery module.

Based on the above arrangement, the convenience of battery disassembly can be effectively improved.

In some embodiments, the support portion is located on an inner wall of the box body. Based on this, it is convenient to prevent the battery module from protruding from the box body in the first direction H, so as to improve the structural flatness of the battery.

In some embodiments, the support portion is located between two ends in the first direction (H) of the inner wall of the box body. In this way, it is more conducive to prevent the battery module from protruding from the box body in the first direction.

In some embodiments, the support portion is provided with a convex portion, the connecting portion is pressed onto a surface of the convex portion facing the box cap and is supported by the convex portion, and is fixedly connected with the convex portion; and/or the support portion is provided with a groove, the connecting portion is extended into the groove and is pressed onto a surface of the groove facing the box cap and is supported by the groove, and is fixedly connected with the groove. Based on the convex portion and/or the groove, the stable support of the battery module can be realized, which can enhance the structural stability of the battery while convenient disassembly. In addition, the groove is also conducive to improving the anti-expansion ability of the battery.

In some embodiments, the convex portion is arranged onto an inner wall of the box body, a portion of the inner wall of the box body located on a side of the convex portion adjacent to the box cap in the first direction is an avoidance surface, and the convex portion is protruded inwardly relative to the avoidance surface. The avoidance surface can avoid the protruding portion (such as the connecting portion) of the battery module, so that the battery module can enter the box body smoothly and be supported by the convex portion.

In some embodiments, the convex portion is extended to an end of the box body adjacent to the box bottom in the first direction. The contact between the convex portion and the battery module is sufficient, on the one hand, it can better limit the battery module to improve the structural stability, on the other hand, when the battery module expands due to heat and other reasons, the convex portion can better withstand the expansion force of the battery module, so as to improve the anti-expansion ability of the battery.

In some embodiments, the box body is an integrated structure; or, the box body is a disassembled structure. When the box is an integrated structure, the processing of the box body is relatively simple. When the box is a disassembled structure, it is convenient to realize to place the battery module in the second direction perpendicular to the first direction into the box body, and it is convenient to arrange the groove, to improve the anti-expansion ability of the battery.

In some embodiments, the box body is the disassembled structure and includes at least two longitudinal beams and at least two crossbeams, the at least two longitudinal beams are arranged sequentially spaced apart in a second direction, the at least two crossbeams are arranged sequentially spaced apart in a third direction , the at least two longitudinal beams and the at least two crossbeams are intersected horizontally and vertically, such that at least one cavity is formed in the box body, the second direction and the third direction are perpendicular to each other and are both perpendicular to the first direction, at least one of the two longitudinal beams located on outermost side in the second direction is detachably connected with the crossbeams, and the support portion is arranged on the crossbeams and/or the longitudinal beams. Based on this, the drawer type mounting mode of the battery module can be realized conveniently.

In some embodiments, the support portion includes a convex portion and a groove, the convex portion is arranged on the crossbeams and is protruded inwardly relative to an avoidance surface, and the avoidance surface is a portion of the inner wall of the box body located on a side of the convex portion adjacent to the box cap in the first direction, the groove is arranged on the longitudinal beams. Based on this, it is beneficial to improve the convenience and stability of the mounting process, and improve the anti-expansion ability of the battery.

In some embodiments, the convex portion is arranged on the crossbeams; and/or the groove is arranged on the longitudinal beams. In this way, it is easier to support and fix the battery module smoothly and reliably.

In some embodiments, a maximum surface of the longitudinal beams facing the battery cell is a surface of a largest area of the battery cell. Based on this, the anti-expansion ability of the battery can be further improved.

In some embodiments, the connecting portion is a flange protruding outward by the accommodating member. At this time, the coordination between the connecting portion and the support portion is relatively simple and convenient, and it is convenient to meet the coordination needs of different kinds of support portions.

In some embodiments, the support portion encircles the cavity for a full circle; and/or the connecting portion encircles the accommodating member for a full circle. Based on this, the contact area between the support portion and the connecting portion is larger, which is convenient to achieve a more stable and reliable support fixing effect.

In some embodiments, the connecting portion is in a sealing fit with the support portion, such that spaces of two sides of the connecting portion located in the first direction are sealingly isolated from each other. In this way, the leakage accident on one side of the space can be prevented from affecting the other side of the space, so as to improve the overall working safety of the battery.

In some embodiments, the battery includes a first sealing member arranged between the connecting portion and the support portion, and the first sealing member is configured for realizing a sealing fit between the connecting portion and the support portion. In this way, the sealing fit between the connecting portion and the support portion can be realized simply and conveniently.

In some embodiments, the battery includes a heat exchange component arranged in the accommodating box and located between the battery module and the box bottom, and the heat exchange component is configured for heat changing of the battery module. The heat exchange components dissipate heat for the battery module to improve the battery safety.

In some embodiments, the accommodating member includes a frame, and the frame is enclosed around the at least two battery cells. In this way, it is beneficial to achieve a more stable and reliable fixing of all battery cells.

In some embodiments, the connecting portion is arranged on an outer surface of a side wall of the frame. In this way, it is convenient for the connecting portion to cooperate with the support portion.

In some embodiments, the accommodating member further includes a bottom plate sealingly connected to an end of the frame away from the box cap. In this way, it is easier to mount and fix the battery in the accommodating member, the impact resistance of the battery module is improved, and the risk of water intake is reduced.

In some embodiments, the connecting portion is detachably connected with the support portion. Based on this, the disassembly is more convenient.

In some embodiments, at least two cavities are provided in the box body, the battery includes at least two battery modules, and the at least two battery modules are corresponding to the at least two cavities in an one-to-one manner. In this way, the battery can supply more power.

The electrical devices provided in the present application includes a body and further includes the battery of the embodiment of the present application, the battery is arranged on the body and supplies electrical energy for the body. As the performance of batteries is improved, and the performance of the electrical device is improved.

The manufacturing method of the battery provided in the present application includes:
providing an accommodating box, and the accommodating box includes: a box body, a box cap, and a box bottom; the box cap and the box bottom are connected with two opposite ends along a first direction of the box body, the box cap is detachably arranged, a cavity is provided in the box body, and the box body is provided with a support portion;
providing a battery module, and the battery module includes an accommodating member and at least two battery cells, the at least two battery cells are fixed in the accommodating member, and the accommodating member is provided with a connecting portion; and
placing the battery module into the cavity, pressing the connecting portion onto a surface of the support portion facing the box cap, supporting the connecting portion through the support portion, and connecting the connecting portion and the support portion, to realize supporting and fixing of the box body to the battery module.

By using the above method, the battery can be easily disassembled.

In some embodiments, in a case that placing the battery module into the cavity, supporting the connecting portion through the support portion, and connecting the connecting portion and the support portion, the accommodating member of the battery module is first placed into the cavity, and all battery cells of the battery module is then placed into the accommodating member; or all battery cells of the battery module is first placed into the accommodating member, and the accommodating member of the battery module and all battery cells accommodated in the accommodating member are then placed into the cavity. In this way, the battery module is more flexible and diversified, which is conducive to improving the production efficiency of the battery.

In some embodiments, in a case that placing the battery module into the cavity, supporting the connecting portion through the support portion, and connecting the connecting portion and the support portion, the battery module is placed into the cavity in the first direction; or the battery module is placed into the cavity in the second direction perpendicular to the first direction. In this way, the battery module is more flexible and diversified, which is conducive to improving the production efficiency of the battery.

In the embodiment of the present application, With the cooperation of the support portion and the connecting portion, the battery module is no longer dependent on being fixed by the supporting of the bottom of the box, but instead is fixed by the supporting of the box body. Therefore, the battery cells in the battery module does not need to be bonded to the bottom of the box or the heat exchange component between the bottom of the box and the battery module, which makes the battery module can be disassembled separately, without causing the whole battery to be scrapped. Thus it is beneficial to improve the battery disassembly convenience.

The above description is only a summary of the technical solution of the present application. In order to better understand the technical means of the present application and to implement the present application in accordance with the contents of the specification, and in order to make the above and other purposes, characteristics and advantages of the present application more clearly understood, the specific embodiments of the present application are listed below.

### BRIEF DESCRIPTION OF THE DRAWINGS

The drawings set forth herein are intended to provide further understanding of the present application and form part of the present application, and schematic embodiments of the present application and their descriptions are used to interpret the present application and do not constitute undue qualification of the present application. In the accompanying drawings:
FIG. 1 is a schematic view of an electrical device in an embodiment of the present application;
FIG. 2 is a perspective view of a battery in an embodiment of the present application;
FIG. 3 is an explosion view of a battery in an embodiment of the present application;
FIG. 4 is a schematic view of a combination structure of a battery module and a box body;
FIG. 5 is a section view where the battery module fits into a box body;
FIG. 6 is a perspective schematic view of a box boxy in an embodiment of the present application;
FIG. 7 is a perspective schematic view of a battery module in an embodiment of the present application;
FIG. 8 is an explosion view of a battery module in an embodiment of the present application;
FIG. 9 is a perspective schematic view of an accommodating member with a bottom plate facing up in an embodiment of the present application;
FIG. 10 is the structural schematic view of a box body in other embodiments of the present application;
FIG. 11 is a perspective schematic view of a longitudinal beam shown in FIG. 10.
FIG. 12 is an explosion view of a battery in an embodiment of the present application; and
FIG. 13 is a flowchart of a manufacturing method for a battery in an embodiment of the present application.

In the drawings, the reference signs are listed:
100-electrical device; 101-vehicle; 102-controller; 103-power device; 104-motor; 105-body;
10-battery;
20-battery cell; 201-electrode assembly; 202-housing; 203-shell; 204-end cap; 205-adapter;
206-electrode terminal; 208-maximum surface; 209-electrode tab;
30-accommodating box; 301-box body; 302-box cap; 303-box bottom; 304-crossbeam;
305-longitudinal beam; 306-support portion; 307-onvex portion; 309-cavity; 310-avoidance surface;
40-accommodating member; 401-connecting portion; 402-flange;403-connectiong hole;
404-mounting hole; 405-frame; 406-bottom plate;
50-heat exchange component;
60-first sealing member;
70-second sealing member;
80-protective plate; 801-concave portion;
90-battery module; and
H-first direction; L-second direction; W-third direction.

### DETAILED DESCRIPTION

Embodiments of the present application will be described in detail in combination with the attached drawings below. The following embodiments are intended only to more clearly illustrate the technical solution of the present application and are therefore intended as examples only and cannot be used to limit the scope of protection of the present application.

Unless otherwise defined, all technical and scientific terms used herein have the same meaning as normally understood by those skilled in the art for which the present application is made; the terms used herein are for the purpose of describing specific embodiments only and are not intended to restrict the present application; the terms "includes" and "has" in the specification and claims of the present application and in the accompanying illustrations above, and any variation thereof, are intended to cover non-exclusive inclusion.

In the description of the present application embodiment, the technical terms "first", "second", etc., are used only to distinguish different objects and are not to be construed as indicating or implying relative importance or as implicitly indicating the number, particular order or primary or secondary relationship of the indicated technical features. In the description of the present application embodiment, "a plurality of" means more than two unless otherwise expressly specified.

Reference to "embodiments" in the present application means that a particular feature, structure, or characteristic described in conjunction with an embodiment may be included in at least one embodiment of the present application. The occurrence of the phrase at various locations in the specification does not necessarily refer to the same embodiment, nor is it a separate or alternative embodiment that is mutually exclusive with other embodiments. It is understood, both explicitly and implicitly, by those skilled in the art that embodiments described herein may be combined with other embodiments.

In the description of embodiments of the present application, the term "and/or" is only a kind of association relation describing the associated object, indicating that there can be three kinds of relations, such as A and/or B, which can mean: A alone, A and B simultaneously, and B alone. In addition, the character "/" in the present application generally means that the related object is an "or" relationship.

In the description of the present application embodiment, unless there is additional explicit stipulation and limitation, terms such as "mount", "connect with each other", "connect", "fix", and so on should be interpreted in general terms, for example, "connect" can be interpreted as being fixedly connected, detachably connected, or connected integrally; "connect" can also be interpreted as being mechanically connected or electrically connected; "connect" can be further interpreted as being directly connected or indirectly connected through intermediary, or being internal communication between two components or an interaction relationship between the two components. For the one of ordinary skill in the art, the specific meanings of the aforementioned terms in the present application can be interpreted according to specific conditions.

With the rapid development of electronic products, electric vehicles and other electrical devices, batteries are increasingly widely used. The batteries are not only used in energy storage power systems such as hydraulic power, thermal power, wind power and solar power stations, but also widely used in electric vehicles such as electric bicycles, electric motorcycles, and electric vehicles, as well as military equipment, aerospace, and other fields. With the continuous expansion of power battery application field, its market demand is also expanding, which puts forward higher requirements for battery maintenance convenience.

Typically, a battery includes an accommodating box and a plurality of battery cells arranged in the an accommodating box. In the related technology, all battery cells in the accommodating box are bonded to the bottom of the accommodating box or the components between the bottom of the accommodating box and the battery cells. Due to the large adhesive force, and the small space between the bottom of the accommodating box and the battery cells, the convenience of disassembling the battery is restricted, resulting in great difficulties of the online rework and after-sales of the battery, as well as the subsequent market recycling. In the process of battery use, the whole battery is required to be scrapped once any part is damaged, and it is difficult to disassemble the damaged part separately. For example, if any battery is abnormal, it will be amplified and the entire battery will be scrapped. Further, in case that the Busbar is welded falsely or the temperature collecting member is abnormal, the entire battery will be scrapped, which results in increasing of the maintenance difficulty and the maintenance cost. Moreover, in the subsequent market recycling, it is difficult to disassemble batteries directly and quickly, but can only be disassembled at low temperature. For some batteries, the entire battery needs to be cut first, and then disassembled in a low temperature environment at -48°C, which has problems such as low efficiency, few recyclable components, and difficult gradient utilization.

It can be seen that inconvenient disassembly of the battery exists in relevant technologies, which affects the further promotion and application of the battery. This problem is particularly significant in Cell to Pack.

CTP (Cell to Pack) is a kind of battery that directly transforms the battery cells into a battery by omitting or reducing the intermediate module. Compared with the battery formed based on the three-stage assembly mode of "battery cells-intermediate module-battery", the CTP is beneficial to reduce the number of battery components and improve the weight energy density and product energy density of the battery. However, a bottleneck in the development process of the CTP is the inconvenience of disassembly, which causes great difficulties in online rework, after-sales, and recycling of the CTP, and seriously restricts the further promotion and application of the CTP.

In order to improve the convenience of disassembly of the battery, the present application provides an electrical device and a battery and a manufacturing method for the battery.

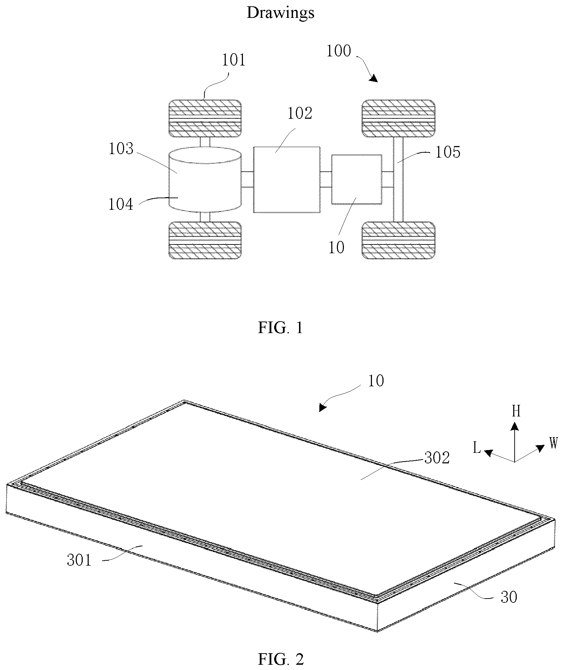

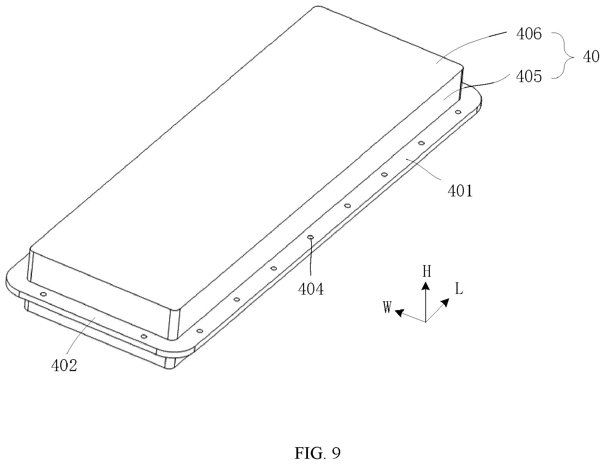

FIG. 1 to FIG. 13 show the electrical device and the battery and the manufacturing method for the battery in some embodiments of the present application.

The following explains the present application in combination with FIGS. 1 to 13.

FIG. 1 illustrates the structure of the electrical device 100 by example.

As shown in FIG. 1, the electrical device 100 is a device that uses the battery 10 as a power source, the electrical device 100 includes the battery 10 and a body 105. The battery 10 is arranged on the body 105 and supplies electrical energy to the body 105.

As an example, the electrical device 100 is a battery cart, an electric vehicles, a ship and a spacecraft, and other electrical devices. The spacecraft includes an aircraft, a rocket, a space shuttle, and a spaceship and so on.

The electrical device 100 includes a power source, the power source includes the battery 10, the battery 10 provides the driving force for the electrical device 100. In some embodiments, the driving force of the electrical device 100 is all electric energy, and in this case, the power source only includes the battery 10. In other embodiments, the driving force of the electrical device 100 includes electrical and other energy sources (e.g. mechanical energy), where the power source includes the battery 10 and other device such as an engine.

Taking the case of the electrical device 100 being a vehicle 101 for example. As shown in FIG. 1, in some embodiments, the electrical device 100 is pure electric vehicle, a hybrid electric vehicle or an extended range vehicle and other new energy vehicles; the electrical device 100 includes power devices 103 such as the battery 10, a controller 102 and a motor 104. The battery 10 is electrically connected to the power devices 103 such as the motor 104 through the controller 102. The battery 10 can supply power to the motor 104 and other power devices 103 under the control of the controller 102.

It can be seen that the battery 10 is an important part of the electrical device 100.

FIGS. 2 to 12 show the structure of the battery 10 by example.

As shown in FIGS. 2 to 12. The battery 10 includes an accommodating box 30 and a battery module 90.

The accommodating box 30 includes a box body 301, a box cap 302 and a box bottom 303. The box cap 302 and the box bottom 303 are connected to opposite ends of the box body 301 along a first direction H, so that a closed accommodating space is formed inside the accommodating box 30 to accommodate the battery module 90. The box cap 302 is detachably arranged to facilitate placing the battery module 90 into the accommodating box 30 when the box cap 302 is opened. When the accommodating box 30 is mounted on the vehicle 101, the first direction H is usually the up and down direction, and the box cap 302 is usually on an upper end. It can be understood that "up" means in the opposite direction of gravity and "down" means in the same direction as gravity.

The battery module 90 is arranged in the accommodating box 30, specifically, the box body 301 is provided with a cavity 309, and the battery module 90 is arranged in the cavity 309. The two ends of the cavity 309 in the first direction H are respectively enclosed by the box cap 302 and box bottom 303. In some embodiments, the box body 301 is provided with at least two cavities 309, and the battery 10 includes at least two battery modules 90, each of the at least two battery modules 90 corresponds to each of the at least two cavities 309 in an one-to-one manner, that is, each cavity 309 is provided with a battery module 90. At this time, a large number of battery modules 90 are available to provide more power to meet higher electrical demand.

The battery module 90 includes battery cells 20. In some embodiments, at least two battery cells 20 are provided to provide more power to meet higher electrical demand. At this time, The battery module 90 includes at least two battery cells 20. The battery cells 20 are electrically connected in series, in parallel, or in a combination manner of series and parallel to transfer power.

The battery cell 20 is the smallest unit used to supply electrical energy, which is the key component of the battery 10 and the electrical device 100. For example, the battery cell 20 is a lithium battery of various cells, and the shape of the battery cell 20 is square or cylindrical, etc.

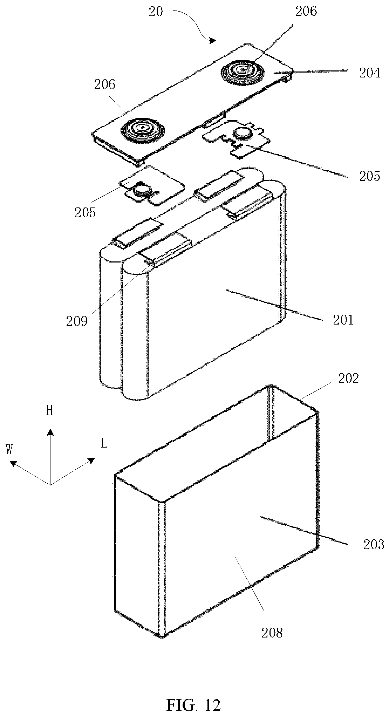

FIG. 12 illustrates the structure of a battery cell.

As shown in FIG. 12, the battery cell 20 includes a housing 202, an electrode assembly 201, an adapter 205, and electrode terminals 206.

In the embodiment, the housing 202 is used to accommodate components (such as the electrode assembly 201 and the adapter 205) located inside the housing 202 to provide protection for the components located inside housing 202. The housing 202 includes a shell 203 and an end cap 204. The end cap 204 is covered onto an end opening of the shell 203, so that a closed space is formed inside the housing 202 for accommodating the electrode assembly 201, etc.

The electrode assembly 201 is used to generate electrical energy, and the electrode assembly 201 is arranged inside the housing 202, and the electrode assembly 201 supplies electrical energy through an electrochemical reaction with the electrolyte injected into the housing 202. The electrode assembly 201 is formed by stacking or winding a positive electrode sheet, a negative electrode sheet and an insulating spacer between the positive and negative electrode sheets. Both the positive and negative electrode sheets include a coated portion coated with an active substance and an electrode tab 209 being not coated with an active substance and extending outward from the coated portion. The electrical energy generated by the electrode assembly 201 is transmitted outward through the electrode tab 209. The electrode tab 209 corresponding to the positive electrode sheet is referred as a positive electrode tab, and the electrode tab 209 corresponding to the negative electrode sheet is referred as a negative electrode tab. The positive electrode tab extends from the coated portion of the positive electrode sheet, and the negative electrode tab extends from the coated portion of the negative electrode sheet. In some embodiments, such as in some square secondary batteries, the positive and negative electrode tabs are located at the same end of electrode assembly 201. In other embodiments, such as in some cylindrical secondary battery flusher, the positive and negative electrode tabs are located at opposite ends of the electrode assembly 201.

The adapter 205 is arranged in the housing 202 and is located between the electrode tabs 209 of the electrode assembly 201 and the electrode terminals 206, to realize the electrical connection between the electrode assembly 201 and the electrode terminals 206 so as to transfer the electric energy generated by electrode assembly 201 to the electrode terminals 206. The adapter 205 corresponding to the positive electrode tab is referred as a positive adapter, and the adapter 205 corresponding to the negative electrode tab is referred as a negative adapter.

The electrode terminals 206 are electrically connected to the electrode assembly 201 through the adapter 205 and are used to connect to an external circuit to transfer the electrical energy generated by the electrode assembly 201 to the outside of the battery cells 20. The electrode terminal 206 corresponding to the negative electrode tab is referred as a negative terminal, and electrode terminal 206 corresponding to the positive electrode tab is referred as a positive terminal.

In related technology, when the battery module 90 is placed in the accommodating box 30, all battery cells 20 in the battery module 90 are placed directly in the accommodating box 30, or all battery cells 20 in the battery module 90 are limited by limiting members before being placed in the accommodating box 30. For example, in some cases, the limiting member includes end plates and side plates. After all battery cells 20 in the battery module 90 are arranged, two end plates and two side plates are placed around all battery cells 20, and two end plates and two side plates are welded together to limit all battery cells 20 in the battery module 90. After that, the limiting member, together with all battery cells 20 in the battery module 90, are placed in the accommodating box 30; for example, in other situations, the limiting member includes steel belts, binding straps, and end plates. The two end plates are arranged on opposite sides of all battery 20 of the battery module 90 and are fixed by the steel belts and the binding straps to limit all battery 20 in battery module 90. In the case of existing of a limiting member, the battery module 90 includes battery cells 20 and the limiting member. In the case that there are no a limiting member, all battery cells 20 in the battery module 90 are placed directly in the accommodating box 30, the battery module 90 includes the battery cells 20 without the limiting member.

In related technology, no matter whether the battery module 90 includes the limiting member, all battery cells 20 in the battery module 90 are bonded to the box bottom 303 or to a component located between the box bottom 303 and the battery module 90 so that the box bottom 303 supports the battery module 90. For example, if there are no other components between the box bottom 303 and the battery module 90, all battery cells 20 in the battery module 90 are bonded to the box bottom 303. For example, in case that a heat exchange component 50 is mounted between the battery module 90 and the box bottom 303, all battery cells 20 in the battery module 900 are bonded to the heat exchange component 50. The heat exchange component 50 is used to exchange heat with the battery module 90 for heat dissipation. As an example, the heat exchange component 50 is a water cooled heat exchange member or an air cooled heat exchange member. In related technology, a support plate is generally arranged between the heat exchange component 50 and the box bottom 303, to improve support capacity of all battery cells 20 in the battery module 90.

In case that all battery cells 20 in the battery module 90 are bonded to the box bottom 303 or to a component located between the box bottom 303 and the battery module 90, which means that all battery cells 20 in the battery module 90 are bonded to a same component, such that all battery cells 20 can only be disassembled as a whole, one or a group of the battery cells 20 cannot be disassembled independently, which will affect the convenience of disassembling, the difficulty of maintenance and recovery is increased, the efficiency of maintenance and recovery is restricted, the cost of maintenance and recovery is increased, and which causes adverse effects on the further promotion and application of the battery 10.

In view of the above situation, the embodiment of the present application improves the structure of the battery 10, the box body 301 are used to support and fix the battery module 90, such that the battery cells 20 in the battery module 90 do not need to be bonded to the box bottom303 or the component between the box bottom303 and the battery module 90, so as to improve the disassembly convenience of the battery 10.

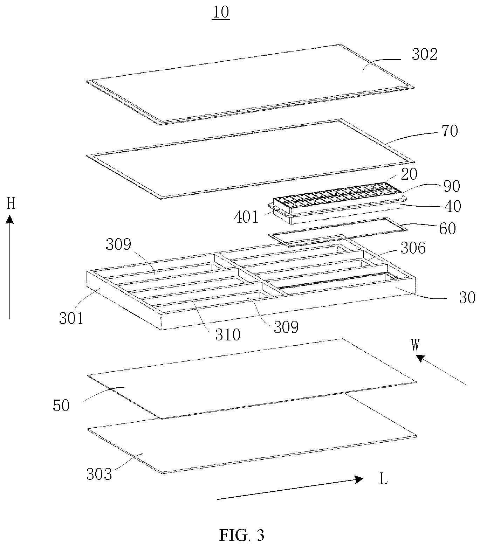

The structure of the battery 10 in the embodiment of the present application is then illustrated in combination with FIGS. 3 to 11.

As shown in FIGS. 3 to 11, in order to improve the disassembly convenience of the battery 10, in the embodiment of the present application, the battery module 90 not only includes at least two battery cells 20, but also includes the accommodation member 40. The all battery cells 20 in the battery module 90 are fixed in the accommodation member 40, and the box body 31 is provided with the support portion 306, the accommodation member 40 is further provided with the connecting portion 401, the connecting portion 401 is pressed onto a surface of the support portion 306 facing the box cap 302 and is supported by the support portion 306, and the connecting portion 401 is fixedly connected with the support portion 306 to realize supporting and fixing of the battery module 90to the box body 301.

With the cooperation of the support portion 306 and the connecting portion 401, the battery module 90 no longer relies on the support of box bottom 303, but is fixed by the support of the box body 301. Therefore, the battery cells 20 in battery module 90 do not need to be bonded to the box bottom 303 or the components such as the heat exchange component 50 located between box bottom 303 and the battery module 90. This enables the battery module 90 to be independent of other components (such as other battery modules 90 of battery 10) of the battery 10, so that in case of damage, the battery module 90 can be disassembled separately without causing the entire battery 10 to be scrapped, which can effectively improve the disassembly convenience of the battery 10 and solve the problem of difficult to disassembly the battery 10. In this way, the battery 10 can realize the online timely rework, after-sale online replacement and gradient utilization of the battery module 90, the difficulty of maintenance and recovery is reduced, the efficiency of maintenance and recovery is improved, the cost of maintenance and recovery is saved, which facilitated the further promotion and application of the battery 10, especially the CTP.

In addition, since the entire battery module 90 is supported and fixed by the box body 301 instead of the box bottom 303, therefore, the requirements on the supporting capacity of the box bottom 303 can be reduced, so that the support plate originally arranged between the box bottom 303 and the battery module 90 can be omitted, which is conducive to improving the energy density of the battery 10.

The positions of the support portion 306 are not limited herein.

As an example, the support portion 306 is located on at least one of the two end surfaces of the box body 301 in the first direction H. For example, in some embodiments, the support portion 306 is located on the end surface (or referred to as the top surface of the box body 301) of the box body 301 facing the box cap 302, or the support portion 306 is directly the end surface of the box body 301 facing the box cap 302, at this time, the support portion 306 is located at the end (or referred to as the top end of box body 301) of the box body 301 adjacent to the box cap 302, the battery module 90 is supported by the top end of the box body 301. For example, in other embodiments, the support portion 306 is located on the end surface (or referred to as the bottom surface of the box body 301) of the box body 301 facing the box bottom 303. For example, the support portion 306 is several support plates extending horizontally inward from the bottom of the box body 301, at this time, the support portion 306 is located at one end (or referred to as the bottom end of the box body 301) of the box body 301 adjacent to the bottom of the box body 301. The battery module 90 is supported by the support portion 306 at the bottom of the box body 301. In some embodiments, the frame 405 of the battery module 90 is directly supported by the support portion 306 at the bottom of the box body 301, where the frame 405 serves as the connecting portion 401.

As a variation, as shown in FIGS. 3 to 11, in some embodiments, the support portion 306 is no longer located on the end surface of the box body 301, but on the inner wall of the box body 301. In the embodiment, it is more convenient to prevent the battery module 90 from protruding from the box body 301 in the first direction H, thus improving the structural flatness of the battery 10.

When the support portion 306 is located on the inner wall of the box body 301, the support portion 306 can be located at least one of the two ends of the inner wall of the box body 301 in the first direction H, or the support portion 306 can be located between the two ends of the inner wall of the box body 301 in the first direction H. When the support portion 306 is located between the two ends of the inner wall of the box body 301 in the first direction H, it is more conducive to prevent the battery module 90 protruding from the box body 301 in the first direction H, and improve the structure flatness of the battery 10, at the same time, since the battery module 90 can be mostly located in the box body 301and limited by the box body 301, so that the structural stability is better.

In addition, the structural form of the support portion 306 is not limited herein.

For example, as shown in FIGS. 3 to 11, in some embodiments, the support portion 306 includes a convex portion 307 and the connecting portion 401 pressed against the surface of the convex portion 307 facing the box cap 302, supported by the convex portion 307, and the connecting portion 401 is fixedly connected with the convex portion 307. Based on the convex portion 307, the stable support for the battery module 90 can be realized, which is convenient for disassembling and enhances the structural stability of the battery 10.

Specifically, as shown in FIGS. 3 to 11, in some embodiments, the convex portion 307 is arranged on the inner wall of the box body 301. The portion of the inner wall of the box body 301 in the first direction H is located on the side of the convex portion 307 adjacent to the box cap 302, and the convex portion 307 projects inward relative to the avoidance surface 310. Based on this, the convex portion 307 can be obtained conveniently. In addition, the side of the convex portion 307 adjacent to the box cap 302 is provided with the avoidance surface 310, which is convenient for the assembly of the battery module 90 and the box body 301, since when the battery module 90 enters the box body 301, the avoidance surface 310 can avoid the protruding portion (such as the connecting portion 401) of the battery module 90, so that the battery module 90 can enter the box body 301 smoothly and is supported by the convex portion 307.

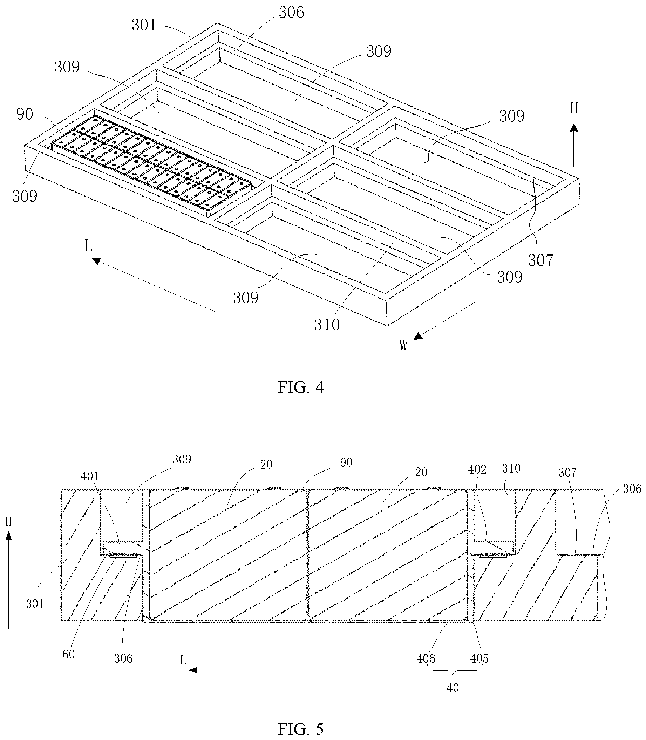

More specifically, in the first direction H, the convex portion 307 extends to be above the bottom end (that is, the end of the box body 301 adjacent to box bottom 303) of the box body 301, or, the convex portion 307 extends to the bottom end of the box body 301. When the convex portion 307 extends to be above the bottom end of the box body 301and spaced apart from and the box bottom 301, the side wall cavity 309 provided with the convex portion 307 is divided into three portions, the three portions are the avoidance surface 310 adjacent to the box cap 302, the convex portion 307 located at the middle, and a portion adjacent to the box bottom 303 and recessed relative to the convex portion 307. When the convex portion 307 is extended to the bottom end of the box body 301 and spaced apart from the bottom end of the bottom end of the box body 301, the side wall cavity 309 provided with the convex portion 307 is divided into two portions, the two portions are the avoidance surface 310 adjacent to the box cap 302 and the convex portion 307 adjacent to the box bottom 303. Compared with the convex portion 307 extended to be above the bottom end of the box body 301, when the convex portion 307 extended to the bottom end of the box body 301, the processing of the convex portion 307 is more convenient, for example, a side portion of the corresponding side wall adjacent to the box cap 302 is thinner to obtain the avoidance surface 310 and the convex portion 307. In addition, as the surface area of the convex portion 307 towards the battery module 90 is larger, as shown in FIG. 5, the contact between the convex portion 307 and the battery module 90 is relatively full, on the one hand, it can better limit the position of the battery module 90 and improve the structural stability; on the other hand, when the battery module 90 expands due to heat and other reasons, the convex portion 307 can also better withstand the expansion force of the battery module 90, thus improving the anti-expansion ability of the battery 10.

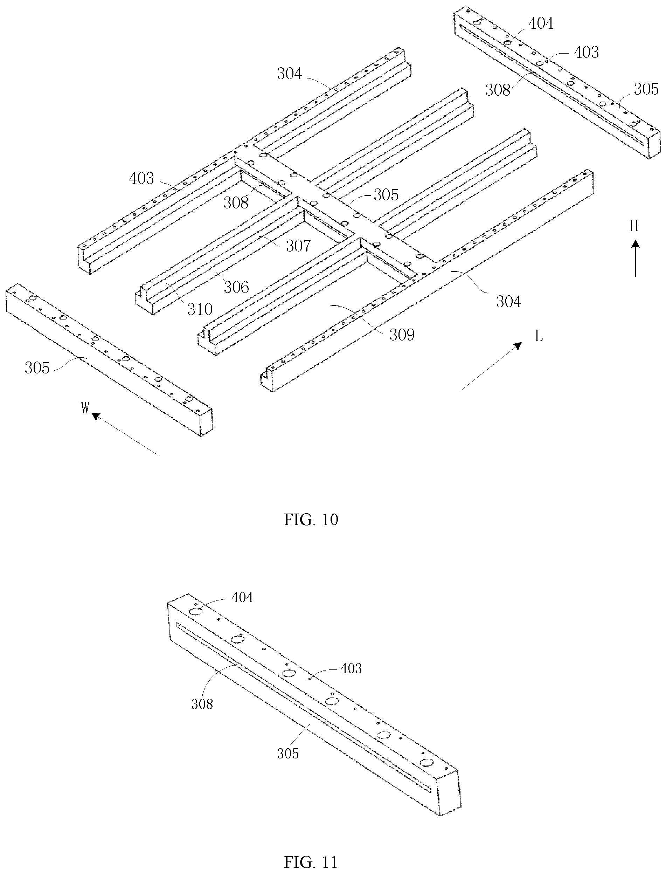

For another example, as shown in FIGS. 11 to 12, in other embodiments, the support portion 306 includes a groove 308, the connecting portion 401 extends into the groove 308 and is pressed against the surface of the groove 308 facing the box cap 302, supported by the groove 308, and the connecting portion 401 is fixedly connected to the groove 308.

Based on the groove 308 arranged, the stable support for the battery module 90 can be realized, which can facilitate disassembly and enhance the structural stability of the battery 10.

In addition, since the connecting portion 401 needs to extend into the groove 308 when the connecting portion is matched with the groove 308, rather than laid onto the convex portion 307 as being matched with the convex portion 307. Therefore, the advantage of the groove 308 over the convex portion 307 is that, on the one hand, the groove 308 can not only limit the connecting portion 401 through the surface of the groove 308 towards the box cap 302, but also through other surfaces, the limiting effect to the connecting portion 401 is better, which is conducive to further improving the structural stability. On the other hand, the groove 308 itself has the effect of avoidance. On the other hand, the groove 308 itself has the effect of avoidance. Therefore, there is no need to arrange the avoidance surface 310, the connecting portion 401 can be avoided during the battery module 90 is placed into the battery 10, which makes the corresponding part of the original avoidance surface 310 can also be in contact with the battery module 90, so as to provide a cyclic expansion binding force to resist expansion. Therefore, it is beneficial to further improve the anti-expansion ability of the battery 10. Moreover, from another point of view, since the anti-expansion ability of the box body 301 is enhanced when the groove 308 is provided, the side wall thickness of the box body 301 with the groove 308 can be reduced under the condition of consistent expansion force, which is conducive to improving the energy density of the battery 10.

For another example, as shown in FIGS. 11 to 12, in other embodiments, the support portion 306 includes both the convex portion 307 and the groove 308. In the embodiment, the connecting portion 401 realizes support of the support potion 306 by lapping to the convex portion 307 on the one hand, and realizes support of the support potion 306 by inserting into the groove 308 on the other hand. It is not only convenient to be assembled to realize stable support effect, but also can take into account the anti-expansion ability of the battery 10.

In an embodiment of the present application, the box body 301 is an integrated structure or a disassembled structure. When the box body 301 is the integrated structure, the process of the box body 301 is relatively simple, this time the box body 301 is especially suitable for the situation that the battery module 90 is placed in the first direction H. When the box body 301 is the disassembled structure, it is convenient to realize the placement of the battery module 90 into the box body 301 in the second direction L perpendicular to the first direction H, and it is convenient to arrange the groove 308 to improve the anti-expansion ability of the battery 10.

As an example of the disassembled structure of the box body 301, as shown in FIGS. 10 to 11, the box body 301 includes at least two longitudinal beams 305 and at least two crossbeams 304, the at least two longitudinal beams 305 are arranged sequentially at intervals in the second direction L, and the at least two crossbeams 304 are arranged sequentially at intervals in the third direction W. The at least two longitudinal beams 305 and the at least two crossbeams 304 intersect horizontally and longitudinally so that at least one cavity 309 is formed inside the box body 301, and at least one of the two longitudinal beams 305 located on the outermost side in the second direction L is detachably connected to the crossbeams 304, the support portion 306 is arranged on the crossbeams 304 and/or the longitudinal beams 305. The second direction L and the third direction W are perpendicular to each other, and both are perpendicular to the first direction H.

Since the at least one of the two longitudinal beams 305 located on the outermost side in the second direction L is detachably connected to the crossbeams 304, the box body 301 is no longer an integrated structure, but a disassembled structure. In the embodiment, as shown in FIG. 10, when assembling the battery module 90 and the box body 301, the detachable longitudinal beams 305 can be removed first, the battery module 90 is then pushed from the side of the removed longitudinal beam 305 into the cavity 309 in the first direction L, and the longitudinal beams 305 is then mounted to realize the drawer type mounting manner of the battery module 90. In this way, the mounting manner of the battery module 90 is no longer limited to the vertical placement in the first direction H, but can also adopt the horizontal placement in the second direction L, so as to effectively enrich the mounting manner of the battery module 90, the mounting flexibility of the battery module 90 is improved, so as to meet more diverse mounting requirements.

When the box body 301 includes the aforementioned detachable longitudinal beams 305 and the support portion 306 includes both the convex portion 307 and the groove 308, as shown in FIGS. 10 and 11, in some embodiments, the convex portion 307 is arranged on the crossbeams 304 and protrudes inward with respect to the avoidance surface 310. The avoidance surface 310 is the portion of the inner wall of the box body 301 located on the side of the convex portion 307 adjacent to the box cap 302 in the first direction H, and the groove 308 is arranged on the longitudinal beams 305. Based on this, when using the drawer mounting manner to mount the battery module 90, on the one hand, in the process of pushing the battery module 90 into the cavity 309 in the second direction L, the connecting portion 401 can be pressed on the convex portion 307 on the crossbeams 304 and supported by the convex portion 307, such that the pushing process can be completed more smoothly. On the other hand, after the battery module 90 is pushed into place and the removed longitudinal beam 305 is remounted in place, the connecting portion 401 can also be inserted into the groove 308 on the longitudinal beams 305 and limited by the groove 308, so that the battery module 90 can be effectively supported during the entire mounting process. Moreover, after being mounted, the longitudinal beam 305 provided with the groove 308 can better withstand the expansion force, therefore, the anti-expansion ability is strong.

The convex portion 307 can be arranged on only a part of the crossbeams 304, or arranged on all crossbeams 304. When the convex portion 307 is arranged on all crossbeams 304, and the convex portion 307 is arranged on all crossbeams 304 to support and fix the battery module 90 more smoothly.

In addition, the groove 308 can be arranged on only a part of the longitudinal beams 305, or arranged on all longitudinal beams 305. When the groove 308 is arranged on all longitudinal beams 305, and the groove 308 is arranged on all longitudinal beams 305, the support fixing effect is more stable and reliable, and the anti-expansion ability is stronger.

For example, as shown in FIG. 10, in some embodiments, all crossbeams 304 are provided with the convex portion 307 on the portion corresponding to each cavity 309, while all longitudinal beams 305 are provided with a groove 308 on the portion corresponding to each cavity 309, in this way, the assembly is convenient, the support fixing effect is well, and the anti-expansion ability is stronger.

As shown in FIGS. 3 to 11, in some embodiments, a maximum surface 208 of the longitudinal beams 305 facing the battery cell 20 is a surface of a largest area of the battery cell 20. At this time, compared with other surfaces being in contact with the battery cell 20, the longitudinal beams 305 being in contact with the maximum surface 208 of the battery cell 20 has a larger contact area, and the anti-expansion ability is strong.

In the embodiment of the present application, the structural form and location of the connecting portion 401 are not limited, as long as it can cooperate with the support portion 306 to realize the supporting and fixing of the entire battery module 90 by the box body 301. For example, as shown in FIGS. 3 to 11, in some embodiments, the connecting portion 401 is a flange 402 projecting outward from the accommodating portion 40. When the connecting portion 401 is the flange 402, the coordination between the connecting portion 401 and the support portion 306 is simple and convenient, and it can easily meet the coordination requirements of different types of the support portion 306. For example, the flange 402 can not only cooperate with the convex portion 307 to realize the supporting and fixing of the box body 301 to the entire battery module 90, but also cooperate with the groove 308 to realize the supporting and fixing of the box body 301 to the entire battery module 90, which has strong universality and high flexibility.

As shown in FIGS. 3 to 11, in some embodiments, the support portion 306 encircles the cavity 309 for a full circle; and/or, the connecting portion 401 encircles the accommodating member 40 for a full circle. In this way, the contact area between the support portion 306 and the connecting portion 401 is larger, which is convenient to achieve a more stable and reliable support fixing effect. Moreover, when the support portion 306 encircles the cavity 309 for a full circle, and the connecting portion 401 encircles the accommodating member 40 for a full circle, it is also convenient to seal the support portion 306 and the connecting portion 401 together, so as to realize the sealed isolation of the spaces on both sides of the connecting portion 401 in the first direction H.

When the connecting portion 401 is in a sealing fit with the support portion 306, the spaces on both sides of the connecting portion 401 in the first direction H are sealingly isolated from each other, which can prevent the leakage accident on one side of the space from affecting the other side of the space, thus improving the overall working safety of the battery 10. For example, in case that a heat exchange component 50 is mounted between the battery module 90 and the box bottom 303, as well as the heat exchange component 50 being a water-cooled heat exchange component, if the connecting portion 401 is in a sealing fit with the support portion 306, and the spaces of two sides of the connecting portion located in the first direction are sealingly isolated from each other, which can prevent the leakage of heat exchange component 50 from affecting the components above.

In addition, when the support portion 306 is located between the two ends of the box body 301 in the first direction H, the sealing interface isolated the spaces on both sides and formed by sealing fit of the connecting portion 401 and the support portion 306 is arranged adjacent to the box cap 302, which can more effectively prevent the influence of the lower space onto the upper space. Meanwhile, it is also beneficial to improve the probability of passing of the wading test of the battery 10.

The wading test of the battery 10 refers to that before the battery 10 leaves the factory, the battery 10 is necessary to be immersed into water at a certain height, to test the sealing property of the battery 10, so as to determine whether the components above the sealing interface are easy to be soaked. When the position of the sealing interface is higher, it is easier for the battery 10 to pass the wading test.

In related technology, the sealing interface that seals and isolates the spaces on both sides is usually located between the battery module 90 and the box bottom 303. For example, when the heat exchange component 50 is mounted between the battery module 90 and the box bottom 303, the sealing interface is usually located between the battery cells 20 and the heat exchange component 50, when the position of the sealing interface is lower and has low wading ability, it is difficult to prevent the leakage of the heat exchange component 50, which affects the components above the heat exchange component 50, the work safety is lower.

When the support portion 306 is located between the two ends in the first direction H of the box body 301, and the sealing fit between the connecting portion 401 and the support portion 306 makes the spaces on both sides in the first direction H located in the connecting portion 401 are sealingly isolated from each other, the position of the sealing interface can be made higher, and the working safety and the probability of passing of the wading test of the battery 10 can be improved.

In order to achieve a sealing fit between the connecting portion 401 and the support portion 306, as shown in FIG. 5, in some embodiments, the battery 10 includes a first sealing member 60 arranged between the connecting portion 401 and the support portion 306, and the first sealing member 60 is configured for realizing a sealing fit between the connecting portion 401 and the support portion 306. In this way, the sealing fit between the connecting portion 401 and the support portion 306 can be realized simply and conveniently. For example, the first sealing member 60 is a gasket or a sealant.

As one of the embodiments of the accommodating member 40 in the preceding embodiments, as shown in FIGS. 3 to 11, the accommodating member 40 includes a frame 405, and the frame 405 is enclosed around all battery cells 20 of the battery module 90. Since the frame 405 is enclosed around all battery cells 20 of the battery module 90, therefore, the accommodating member 40 can restrict all battery cells 20 in the battery module 90, which is conducive to the stable and reliable fixing of all battery cells 20.

In the case that the accommodating member 40 includes the frame 405, as shown in FIGS. 3 to 11, in some embodiments, the connecting portion 401 is arranged on the outer surface of the side wall of the frame 405. In this way, the fitting between the connecting portion 401 and the support portion 306 is convenient, so that the box body 301 can support and fix the entire battery module 90.

In addition, as shown in FIGS. 3 to 11, in some embodiments, the accommodating member 40 includes not only the frame 405 but also a bottom plate 406, the bottom plate 406 is sealingly connected to the end of the frame 405 away from the box cap 302. Based on this, on the one hand, since the bottom plate 406 can further support all battery cells 20 of the battery module 90, it is more convenient to realize the mounting and fixing of the battery cells 20 in the accommodating member 40, so that the battery cells 20 do not need to be bonded to the box bottom 303 or the component between the box bottom 303 and the battery module 90, thus improving the disassembly convenience. Further, it is beneficial to enhance the impact resistance of the battery module 90 in the first direction H, so as to further improve the structural stability of the battery module 90. On the other hand, since the bottom plate 406 is sealingly connected with the frame 405, the end opening of the frame 405 towards the bottom 303 is sealed. Therefore, the battery cells 20 can be sealed and isolated from the components (such as the heat exchange component 50) below the battery cells 20, to reduce the risk of water intake of the battery cells 20 and to improve the safety performance of the battery 10. In particular, when the bottom plate 406 is sealingly connected with the frame 405, and the connecting portion 401 is sealingly connected with the support portion 306, the spaces on both sides of the connecting portion 401 in the first direction H is are sealingly isolated from each other, the battery cells 20 can be more effectively protected and the risk of water intake of the battery cell 20 can be reduced.

In each of the aforementioned embodiments, in order to further improve the disassembly convenience of the battery module 90, the connecting portion 401 is detachably connected to the support portion 306. In this way, when disassembling the battery module 90, other structures such as the battery module 90 or the box body 301 will not be damaged, which is more convenient for disassembling.

The embodiments shown in FIGS. 2 to 11 are then further explained.

First, the first embodiment shown in FIGS. 2 to 9 is introduced.

As shown in FIGS. 2 to 9, in this first embodiment, the battery 10 includes a accommodating box 30, a battery module 90, a heat exchange component 50, a first sealing member 60, and a second sealing member 70.

The accommodating box 30 is used to accommodate other components of the battery 10 such as the battery module 90 and the heat exchange component 50. As shown in FIGS. 2 to 6, the accommodating box 30 in the embodiment includes a box body 301, a box cap 302, and a box bottom 303. The box cap 302 and the box bottom 303 are arranged at opposite ends of the box body 301 in the first direction H.

The box body 301 is an integral welded structure, including four crossbeams 304 and three longitudinal beams 305. The length directions of the four crossbeams 304 are all in the second direction L, and the four crossbeams 304 are arranged side by side at intervals with each other in the third direction W. The length directions of the three longitudinal beams 305 are in the third direction W, and the three longitudinal beams 305 are arranged side by side at intervals with each other in the second direction L. Each longitudinal beam 305 intersects all crossbeams 304, and each crossbeam 304 intersects all longitudinal beams 305, so that any two adjacent crossbeams 304 and any adjacent two longitudinal beams 305 are enclosed to form a cavity 309, so that there are a total of six cavities 309 in the box body 301. Each cavity 309 is rectangular, and its surrounding side walls are the corresponding parts of the crossbeams 304 and the longitudinal beams 305 to the cavity 309. Two ends of each cavity 309 is opened in first direction H to form openings.

The box cap 302 is connected to the first end of the box body 301 in the first direction H and encloses the openings of the first ends of all cavities 309 of the box body 301. Specifically, as shown in FIGS. 3 to 6, in the embodiment, the end surface of the box body 301 facing the box cap 302 is provided with a connection hole 403, bolts and other connectors pass through the box cap 302 and the connection hole 403 to realize the detachable connection between the box cap 302 and the box body 301, so that the box cap 302 can be removed from the box body 301 to facilitate the placing of the battery module 90. Moreover, as shown in FIG. 3, in the embodiment, a second sealing member 70 is arranged between the end surface of the box body 301 facing the box cap 302 and the box cap 302. Thus, when the bolts and other connectors lock the box cap 302, the box cap 302 is pressed against the second sealing member 70, and the second sealing member 70 can effectively seal the interface between the box cap 302 and the box body 301, the leakage or intake of liquid can be avoided. The box cap 302 is, by example, a sheet metal. It should be noted that connection hole 403 is not shown in FIGS. 3 and 4.

The box bottom 303 is connected to the second end of the box body 301 in the first direction H and encloses the openings of the second ends of all cavities 309 of the box body 301. As shown in FIG. 3, in the embodiment, the box bottom 303 is in a plat shape, and is a sheet metal and made of aluminum. The box bottom 303 is detachably connected to the box body301, or is non-detachably connected to the box body301.

Based on the box body 301, the box cap 302 and the box bottom 303, the accommodating box 30 can provide a mounting space for the battery module 90, so as to limit and protect the battery module 90.

The battery module 90 is arranged in the cavity 309 and is used to supply electric energy. In order to clearly show the structure, only one battery module 90 is shown in FIG. 3, but it should be understood that each cavity 309 contains one battery module 90, that is, the battery 10 includes a plurality of battery modules 90, specifically, the battery 10 includes six battery modules 90.

In order to simplify the structure, the structures of the battery modules 90 are the same. As shown in FIGS. 3 to 9, in the embodiment, the battery module 90 includes the accommodating member 40, a plurality of battery cells 20, and two protective plates 80.

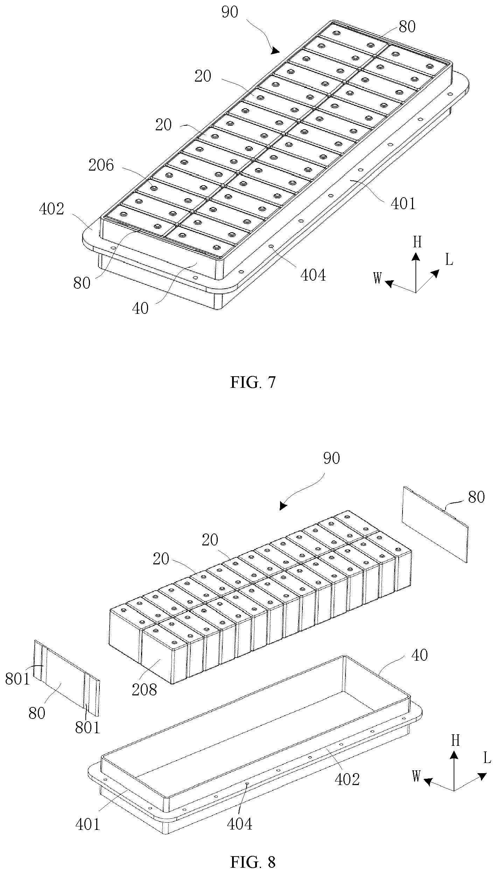

In the embodiment, the accommodating member 40 includes a frame 405 and a bottom plate 406. As shown in FIGS. 7 to 9, the frame 405 is a hollow rectangle, and both ends of the frame 405 are opened in the first direction H. The bottom plate 406 is welded to the end of frame 405 adjacent to the box bottom 303 to achieve a sealed connection to the frame 405.

The plurality of battery cells 20 of the battery module 90 are arranged in the accommodating member 40. As shown in FIGS. 7-8, in the embodiment, the battery cells 20 are arranged as a matrix in the accommodating member 40, such that the battery cells 20 are surrounded by the frame 40, and the battery cells 20 are supported by the bottom plate 406. In the embodiment, each battery cell 20 is bonded to the bottom plate 406 such that all battery cells 20 of the battery module 90 are fixed in the accommodating member 40. As shown in FIG. 8, in the embodiment, each battery cell 20 is in a square shape, and the maximum surface 208 is perpendicular to the second direction L, such that the maximum surfaces 208 of battery cells 20 are faced the longitudinal beams 305.

The two protective plates 80 are arranged in the accommodating member 40 and are located at both ends of all battery cells 20 in the second direction L. At this time, the protective plates 80 are located in the gaps between the outermost battery cells 20 and the frame 405 in the second direction L. The protective plates 80 are made of insulating material (such as plastic) to provide insulation protection. In the embodiment, as shown in FIG. 8, each protective plate 80 is provided with concave portions 801, and the concave portions 801 are arranged on the surface of protective plate 80 facing away from the battery cells 20. Each protective plate 80 is provided with two concave portions 801, which are arranged at intervals in the third direction W. In this way, when the battery cells 20 are placed into the accommodating member 40, all battery cells 20 can be firstly arranged into a matrix, and two ends in the second direction L are respectively arranged with one protective plate 80, so that all battery cells 20 are sandwiched between the two protective plates 80, and then the claws are clamped into two concave portions 801 of each protective plate 80. A pressure is applied to the maximum surface 208 of the battery cell 20, to pick up all battery cells 20 together with two protective plates 80 and put them into the accommodating member 40 to realize the process of overpressing battery cell 20 into the box. After all battery cells 20 together with two protective plates 80 are overpressed into the accommodating member 40, the battery cells 20 spring back in the second direction L and resist the frame 405, such that the arrangement of the battery cells 20 into the accommodating member 40 is more stable.

Based on the accommodating member 40 and the two protective plates 80, all battery cells 20 of the battery module 90 can be fixed in the accommodating member 40 stably and reliably, so that each of the battery modules 90 can be independent from each other, and each of the battery modules 90 can be independent from the box bottom 303, so as to improve the disassembly convenience of the battery module 90.

As shown in FIG. 3, the heat exchange component 50 is arranged in the accommodating box 30 and is located between the battery module 90 and the box bottom 303. The heat exchange component 50 is used for heat exchange with the battery module 90 to dissipate heat and improve the safety of the battery 10. Specifically, in the embodiment, the heat exchange component 50 is the water cooling plate.

In related technology, all battery cells 20 of all battery modules 90 are bonded to the same heat exchange component 50, which makes it difficult to disassemble the battery module 90 independently, such that the disassembly is difficult, which affects the online disassembly, after-sales rework, and recycling of battery 10.

In order to solve the above technical problems, as shown in FIG. 3 to 9, in the embodiment, the inner wall of each cavity 309 is provided with the support portion 306, and correspondingly, the outer wall of the frame 405 of each battery module 90 is provided with the connecting portion 401, the connecting portion 401 is pressed on the surface of the support portion 306 facing the box cap 302. The connecting portion 401 is detachably connected to the convex portion 307 through bolts and other connectors, such that the entire battery module 90 is fixed and supported by the box body 301, instead of being bonded to the heat exchange component 50.

As shown in FIGS. 3 to 6, in the embodiment, the support portion 306 includes four convex portions 307, the four convex portions 307 are located on the inner walls of the four sides of the cavity 309, such that the inner surface of each crossbeam 304 and each longitudinal beam 305 corresponding to each cavity 309 are provided with the convex portions 307, and the four convex sections 307 are connected end to end so that support portion 306 encircles the cavity 309 for a full circle. Each section of the convex portions 307 is located on a side of the top surface (i.e. the end surface of the box body 301 facing the box cap 302) of the box body 301 adjacent to the box bottom 303, and extends to the end of the box body 301 adjacent to the box cap 302, so that the support portion 306 is located between the two ends of the inner wall of cavity 309 in the first direction H. In addition, the portion of the inner wall of cavity 309 located on one side of each section of the convex portions 307 adjacent to the box cap 302 is retracted relative to the convex portion 307 facing outward (i.e. towards the direction away from the battery unit 20), to form the avoidance surface 310, so that the inner walls of the cavity 309 on four sides are divided into two parts in the first direction H. The two parts are the avoidance surface 310 and the convex portion 307 arranged successively along the direction from the box cap 302 to the box bottom 303. The convex portion 307 protrudes inward from the avoidance surface 310 (that is, towards the direction approaching the battery cell 20), and the avoidance surface 310 and the convex portion 307 are connected to form a step.

As shown in FIGS. 7 to 9, in the embodiment, the connecting portion 401 is a flange 402 that encircle the frame 405 for a full circle. The flange 402 is arranged between the two ends of the frame 405 in the first direction H and protrudes from the outer wall of the frame 405 in the direction facing away from the battery cell 20.

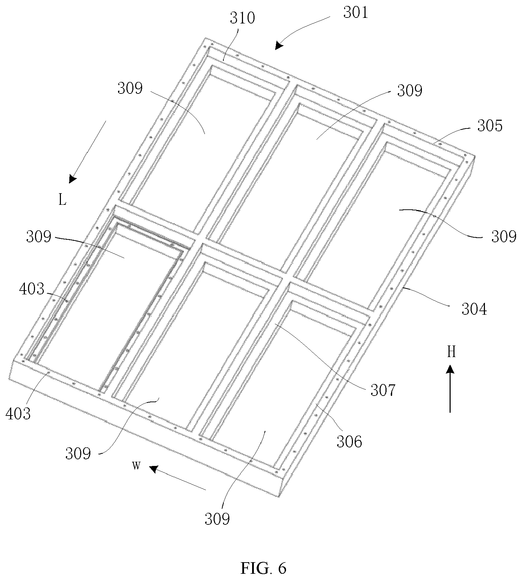

After placing the battery module 90 into the box body 301, as shown in FIG. 5, the flange 402 is pressed on the surfaces of the four convex portions 307 facing the box cap 302, so that the support portion 306 supports connecting portion 401, thus realizing the support of the box body 301 to the entire battery module 90. Moreover, as shown in FIGS. 4 to 9, in the embodiment, the end surfaces of the four convex portions 307 facing the box cap 302 are provided with mounting holes, correspondingly, the flange 402 is further provided with mounting holes 404, the mounting hole 404 is also provided on flange 402. the bolts and other connectors penetrate through the mounting holes 404 on the convex portions 307 and the flange 402 to realize the fixed connection between the connecting portion 401 and the support portion 306, such that the entire battery module 90 is fixed to the box body 301. Due to the use of bolts and other connectors, the support portion 306 is detachable from the connection section 401, so that the battery module 90 is also detachable from the box body 301. It should be noted that the mounting holes 404 on the box body 301 are not shown in FIGS. 3 and 4, and only the mounting holes 404 on the box body 301 are shown in FIG. 6. Although FIG. 6 only shows the mounting holes 404 on the support portion 306 of one cavity 309, it should be understood that the mounting holes 404 are further provided on the support portion 306 of other cavities 309.

Based on the coordination between the support portion 306 and the connecting portion 401, the entire battery module 90 is supported and fixed on the box body 301. All battery cells 20 of the battery module 90 are no longer bonded to the heat exchange component 50. Therefore, each of the battery modules 90 becomes independent from each other. Thus, it can effectively improve the disassembly convenience of the battery 10, which facilitates the realization of online timely rework, after-sale online replacement and reuse of the battery module, which is of great significance for the further promotion and application of battery 10, especially the CTP.

Moreover, the matching position of connecting portion 401 and support portion 306 is located between the two ends of the box body 301 in the first direction H, the matching position is relatively high and the depth of the matching position is shallow. Therefore, it is convenient for the user to operate. That is, it is also convenient to improving the convenience of disassembly.

In addition, in the embodiment, all battery cells 20 of the battery module 90 are bonded to the bottom plate 406 of the accommodating member 40 instead of being bonded to the same heat exchange component 50 together with the battery cells 20 of other the battery module 90. Therefore, the planeness of the bonding surface is easier to be controlled and is conducive to improving the flatness of the entire battery module 90. The strength of the entire battery module 90 is increased.

In addition, as shown in FIGS. 3 to 5, in the embodiment, a first sealing member 60 is arranged between the connecting portion 401 and the support portion 306 to realize the sealing fit between the connecting portion 401 and the support portion 306. Specifically, the first sealing member 60 is a sealing gasket, a middle of the first sealing member 60 is provided with holes, and the first sealing member 60 is pressed by the connecting portion 401 on the four the convex portion 307, to seal a full circle of the cavity 309.

In the embodiment, the connecting portion 401 and support portion 306 are encircled the cavity 309 for a full circle, the first sealing member 60 is used to realize the sealing fit of connecting portion 401 and support portion 306, so that the spaces on both sides of connecting portion 401 in the first direction H in the accommodating box 30 can be sealed and isolated from each other. Even if there is water leakage due to improper mounting or structural damage of the heat exchange component 50, the water leaking from the heat exchange component 50 will not flow to the accommodating member 40, which will affect the normal operation of battery 20, so as to improve the working safety of the battery 10.

At the same time, in the embodiment, the sealing interface formed by connecting portion 401 and support portion 306 is in a higher position between the two ends of the box body 301 in the first direction H, it is also conducive to improving the wading ability of the battery 10.

It can be seen that the battery 10 in the embodiment is convenient to disassemble and has high working safety.

Since the box body 301 of the battery 10 in the embodiment is an integral structure, therefore, the battery module 90 can be placed into the box body 301 in the first direction H during the assembly process, so that the battery module 90 is pressed onto the support portion 306 under the action of gravity and supported by the box body 301. In addition, when the battery module 90 is placed into the box body 301, the accommodating member 40 is first placed into the box body 301, the battery cells 20 are then placed into the accommodating member 40, or the battery cells 20 are first placed into the accommodating member 40, the accommodating member 40 together with the battery cells 20 are then placed into the box body 301.

After the battery module 90 is placed into the box body 301, the heat exchange component 50 and box bottom 303 can be first mounted, and the box cap 302 can then be mounted.

The second embodiment shown in FIGS. 10 and 11 is then introduced. In order to simplify the description, only the differences between the second embodiment and the first embodiment mentioned above are introduced below, the other parts can be understood by referring to the first embodiment mentioned above.

As shown in FIGS. 10 and 11, the difference between the second embodiment and the first embodiment above is that the box body 301 is no longer an integrated structure, but a disassembled structure.

Specifically, it can be seen from FIGS. 10 and 11 that in the second embodiment, although the box body 301 is still formed by the transverse and longitudinal intersection of four crossbeams 304 and three longitudinal beams 305, the two longitudinal beams 305 of outermost sides located in the second direction L are no longer welded to the four crossbeams 304, but are detachable connected to the four crossbeams 304. FIG. 10 shows the state of the two longitudinal beams 305 of outermost sides removed from the four crossbeams 304.

Based on the above arrangements, when the battery module 90 is placed into the box body 301, the battery module 90 is no longer limited to be placed in along the first direction H, but can also be placed in along the second direction L, to realize the drawer type mounting, so as to effectively improve the mounting flexibility of the battery module 90.

Based on the detachable longitudinal beams 305 in the embodiment, as shown in FIGS. 10 and 11, in the embodiment, the structure of the support portion 306 is further changed.

Specifically, in the embodiment, although the connecting portion 401 is still the flange 402 arranged for a full circle surrounding the outer wall of the frame 405, and the support portion 306 is still encircled for a full circle surrounding the cavity 309, the support portion 306 no longer includes four convex portions 307, instead of including two convex portions 307 and two grooves 308. As shown in FIGS. 10 and 11, the two convex sections 307 are located on the side walls of the cavity 309 corresponding to two cross beams 304, and the two grooves 308 are located on the side walls of the cavity 309 corresponding to two longitudinal beams 305. Thus, in the embodiment, each crossbeam 304 is provided with the convex portion 307 and each longitudinal beam 305 is provided with the groove 308. In this way, after all battery modules 90 are pushed into the cavity 309 in the second direction L, and the two removed longitudinal beams 305 are remounted, on the one hand, the flange 402 is pressed onto the convex portion 307 and supported and limited by the convex portion 307; on the other hand, the flange 402 is further inserted into the groove 308, and supported and limited by the groove 308.

Due to the arrangement of the grooves 308, the avoidance surface 310 is no longer arranged onto the longitudinal beam 305 to avoid the flange 402. Therefore, the inner wall surface previously used for providing the avoidance surface 310 can further be in contact with the frame 405 of the battery module 90 to withstand the expansion force. Therefore, the overall anti-expansion ability of the battery 10 is enhanced.

As shown in FIGS. 10 and 11, in the embodiment, in order to realize the detachable connection between the box body 301 and the box cap 302, the end surface of the box body 301 facing the box cap 302 is still provided with connection holes 403, and in order to realize the detachable connection between the battery module 90 and the box body 301, although not shown in FIG. 10, the convex portion 307 is still provided with mounting holes 404, at the same time, the end surface of the longitudinal beam 305 facing the box cap 302 is further provided with mounting holes 404, the mounting holes 404 and the grooves 308 are communicated, so that bolts and other connectors penetrate through the mounting holes 404 on the longitudinal beams 305 to extend into the grooves 308, so as to lock the flange 402, and the connecting portion 401 is fixed in the grooves 308. As can be seen from FIGS. 10 and 11, in the embodiment, the diameter of the mounting hole 404 on the longitudinal beams 305 is larger than the diameter of the connecting hole 403 on longitudinal beams 305. In this way, the diameter of the mounting hole 404 on the longitudinal beams 305 is different from that of the connecting hole 403 on the longitudinal beams 305, which makes it easier to distinguish the mounting hole 404 and the connecting hole 403 quickly in the assembly process, thus improving the assembly efficiency.

It can be seen that the battery 10 in the embodiment is not only convenient for disassembly, but also has high working safety and the anti-expansion ability is stronger.

Due to the box body 301 of the battery 10 of the embodiment has a disassembled structure, therefore, the longitudinal beams 305 of two outermost sides can be removed first during assembly, and then the battery module 90 can be pushed into the box body 301 in the second direction L, so that the flanges 402 of the battery module 90 are inserted into the grooves 308 on longitudinal beam 305 in the middle, and the longitudinal beams 305 of two outermost sides are then mounted, such that the flanges 402 of the battery module 90 are inserted into the grooves 308 on the longitudinal beam 305 of the outer side, so as to realize the support of the box body 301 to the entire battery module 90. When the battery module 90 is placed into the box body 301, the accommodating member 40 is first placed in the box body 301, and the battery cells 20 are then placed in the accommodating member 40; or the battery cells 20 are first placed in the accommodating member 40, and the battery cells 20 together with the accommodating member 40 are then placed in the box body 301.

In addition to providing the battery 10 for each of the aforementioned embodiments, the present application further provides a manufacturing method for the battery 10.

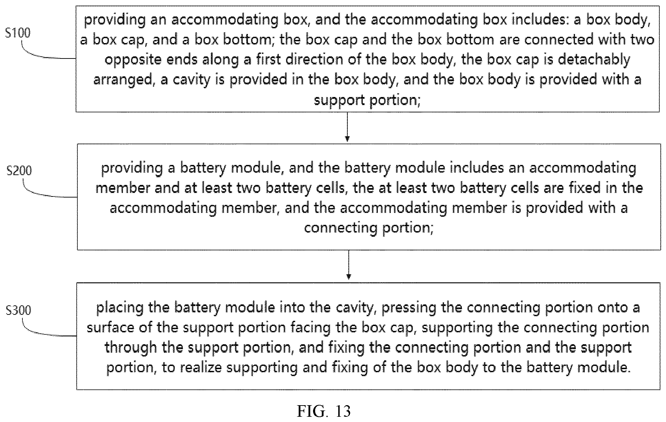

As shown in FIG. 13. In some embodiments, the manufacturing methods for the battery 10 includes:
S100, providing an accommodating box 30, the accommodating box 30 includes: a box body 301, a box cap 302, and a box bottom 303; the box cap 302 and the box bottom 303 are connected with two opposite ends along a first direction H of the box body 301, the box cap 302 is detachably arranged, a cavity 309 is provided in the box body 301, and the box body 301 is provided with a support portion 306;
S200, providing a battery module 90, the battery module 90 includes an accommodating member 40 and at least two battery cells 20, the at least two battery cells 2 are fixed in the accommodating member 40, and the accommodating member 40 is provided with a connecting portion 401; and
S300, placing the battery module 90 into the cavity 309, pressing the connecting portion 401 onto a surface of the support portion 306 facing the box cap 302, supporting the connecting portion 401 through the support portion 306, and connecting the connecting portion 401 and the support portion 306, to realize supporting and fixing of the box body 301 to the battery module 90.

In a case that placing the battery module 90 into the cavity 309, supporting the connecting portion 401 through the support portion 306, and connecting the connecting portion 401 and the support portion 306, the accommodating member 40 of the battery module 90 is first placed into the cavity 309, and all battery cells 20 of the battery module 90 is then placed into the accommodating member 40; or all battery cells 20 of the battery module 90 is first placed into the accommodating member 40, and the accommodating member 40 of the battery module 90 and all battery cells 20 accommodated in the accommodating member 40 are then placed into the cavity 309.

In addition, in a case that placing the battery module 90 into the cavity 309, supporting the connecting portion 401 through the support portion 306, and connecting the connecting portion 401 and the support portion 306, the battery module 90 is placed into the cavity 309 in the first direction H; or the battery module 90 is placed into the cavity 309 in the second direction L perpendicular to the first direction H.

In the present application, the above protection subjects and the features in each embodiment can learn from each other. In the case that the structure allows, those skilled in the art can also combine the technical features in different embodiments flexibly to form more embodiments.

In the present application, specific embodiments are used to explain the principles and embodiments of the present application. The above embodiments are only used to help understand the methods and core ideas of the present application. It should be pointed out that for those skilled in the art, on the premise of not deviating from the principle of the present application, there can be some improvements and modifications to the present application, and these improvements and modifications also fall within the scope of protection of the claims in the present application.

## Claims

1. A battery (10), comprising:
an accommodating box (30), comprising: a box body (301), a box cap (302), and a box bottom (303); wherein the box cap (302) and the box bottom (303) are connected with two opposite ends along a first direction (H) of the box body (301), the box cap (302) is detachably arranged, a cavity (309) is provided in the box body (301), and the box body (301) is provided with a support portion (306); and
a battery module (90), provided in the cavity (309) and comprising an accommodating member (40) and at least two battery cells (20) fixed in the accommodating member (40), wherein the accommodating member (40) is provided with a connecting portion (401), the connecting portion (401) is pressed onto a surface of the support portion (306) facing the box cap (302) and is supported by the support portion (306), and is fixedly connected with the support portion (306), to realize supporting and fixing of the box body (301) to the battery module (90).

2. The battery (10) according to claim 1, wherein the support portion (306) is located on an inner wall of the box body (301).

3. The battery (10) according to claim 2, wherein the support portion (306) is located between two ends in the first direction (H) of the inner wall of the box body (301).

4. The battery (10) according to any one of claims 1 to 3, wherein the support portion (306) is provided with a convex portion (307), the connecting portion (401) is pressed onto a surface of the convex portion (307) facing the box cap (302), is supported by the convex portion (307), and is fixedly connected with the convex portion (307); and/or
the support portion (306) is provided with a groove (308), the connecting portion (401) is extended into the groove (308) and is pressed onto a surface of the groove (308) facing the box cap (302) and is supported by the groove (308), and is fixedly connected with the groove (308).

5. The battery (10) according to claim 4, wherein the convex portion (307) is arranged onto an inner wall of the box body (301), a portion of the inner wall of the box body (301) located on a side of the convex portion (307) adjacent to the box cap (302) in the first direction (H) is an avoidance surface (310), and the convex portion (307) is protruded inwardly relative to the avoidance surface (310).

6. The battery (10) according to claim 5, wherein the convex portion (307) is extended to an end of the box body (301) adjacent to the box bottom (303) in the first direction (H).

7. The battery (10) according to any one of claims 1 to 6, wherein the box body (301) is an integral structure, or the box body (301) is a disassembled structure.

8. The battery (10) according to claim 7, wherein the box body (301) is the disassembled structure and comprises at least two longitudinal beams (305) and at least two crossbeams (304), the at least two longitudinal beams (305) are arranged to be spaced apart in a second direction (L) sequentially, the at least two crossbeams (304) are arranged to be spaced apart in a third direction (W) sequentially, the at least two longitudinal beams (305) and the at least two crossbeams (304) are intersected horizontally and vertically, such that at least one cavity (309) is formed in the box body (301), the second direction (L) and the third direction (W) are perpendicular to each other and are both perpendicular to the first direction (H), at least one of the two longitudinal beams (305) located on outermost side in the second direction (L) is detachably connected with the crossbeams (304), and the support portion (306) is arranged on the crossbeams (304) and/or the longitudinal beams (305).

9. The battery (10) according to claim 8, wherein the support portion (306) comprises a convex portion (307) and a groove (308), the convex portion (307) is arranged on the crossbeams (304) and is protruded inwardly relative to an avoidance surface (310), and the avoidance surface (310) is a portion of the inner wall of the box body (301) located on a side of the convex portion (307) adjacent to the box cap (302) in the first direction (H), the groove (308) is arranged on the longitudinal beams (305).

10. The battery (10) according to claim 9, wherein the convex portion (307) is arranged on the crossbeams (304); and/or the groove (308) is arranged on the longitudinal beams (305).

11. The battery (10) according to any one of claims 8 to 10, wherein a maximum surface (208) of the longitudinal beams (305) facing the battery cell (20) is a surface of a largest area of the battery cell (20).

12. The battery (10) according to any one of claims 1 to 11, wherein the connecting portion (401) is a flange (402) protruding outward by the accommodating member (40).

13. The battery (10) according to any one of claims 1 to 12, wherein the support portion (306) encircles the cavity (309) for a full circle; and/or the connecting portion (401) encircles the accommodating member (40) for a full circle.

14. The battery (10) according to any one of claims 1 to 13, wherein the connecting portion (401) is in a sealing fit with the support portion (306), such that spaces of two sides of the connecting portion (401) located in the first direction (H) are sealingly isolated from each other.

15. The battery (10) according to claim 14, wherein the battery (10) comprises a first sealing member (60) arranged between the connecting portion (401) and the support portion (306), and the first sealing member (60) is configured for realizing a sealing fit between the connecting portion (401) and the support portion (306).

16. The battery (10) according to any one of claims 1 to 15, wherein the battery (10) comprises a heat exchange component (50) arranged in the accommodating box (30) and located between the battery module (10) and the box bottom (303), and the heat exchange component (50) is configured for heat changing of the battery module (90).

17. The battery (10) according to any one of claims 1 to 16, wherein the accommodating member (40) comprises a frame (405), and the frame (405) is enclosed around the at least two battery cells (20).

18. The battery (10) according to claim 17, wherein the connecting portion (401) is arranged on an outer surface of a side wall of the frame (405).

19. The battery (10) according to claim 17 or 18, wherein the accommodating member (40) further comprises a bottom plate (406) sealingly connected to an end of the frame (405) away from the box cap (302).

20. The battery (10) according to any one of claims 1 to 19, wherein the connecting portion (401) is detachably connected with the support portion (306).

21. The battery (10) according to any one of claims 1 to 20, wherein at least two cavities (309) are provided in the box body (301), the battery (10) comprises at least two battery modules (90), the at least two battery modules (90) are corresponding to the at least two cavities (309) in an one-to-one manner.

22. An electrical device (100), comprising a body (105) and a battery (10) as claimed in any one of claims 1 to 21, the battery (10) is arranged on the body (105) and configured for applying power for the body (105).

23. A manufacturing method for a battery (10), comprising:
providing an accommodating box (30), wherein the accommodating box (30) comprises: a box body (301), a box cap (302), and a box bottom (303); the box cap (302) and the box bottom (303) are connected with two opposite ends along a first direction (H) of the box body (301), the box cap (302) is detachably arranged, a cavity (309) is provided in the box body (301), and the box body (301) is provided with a support portion (306);
providing a battery module (90), wherein the battery module (90) comprises an accommodating member (40) and at least two battery cells (20), the at least two battery cells (20) are fixed in the accommodating member (40), and the accommodating member (40) is provided with a connecting portion (401); and
placing the battery module (90) into the cavity (309), pressing the connecting portion (401) onto a surface of the support portion (306) facing the box cap (302), supporting the connecting portion (401) through the support portion (306), and connecting the connecting portion (401) and the support portion (306), to realize supporting and fixing of the box body (301) to the battery module (90).

24. The manufacturing method according to claim 23, wherein during placing the battery module (90) into the cavity (309), supporting the connecting portion (401) through the support portion (306), and connecting the connecting portion (401) and the support portion (306), the accommodating member (40) of the battery module (90) is first placed into the cavity (309), and all battery cells (20) of the battery module (90) is then placed into the accommodating member (40); or all battery cells (20) of the battery module (90) is first placed into the accommodating member (40), and the accommodating member (40) of the battery module (90) and all battery cells (20) accommodated in the accommodating member (40) are then placed into the cavity (309).

25. The manufacturing method according to claim 23 or 24, wherein during placing the battery module (90) into the cavity (309), supporting the connecting portion (401) through the support portion (306), and connecting the connecting portion (401) and the support portion (306), the battery module (90) is placed into the cavity (309) in the first direction (H); or the battery module (90) is placed into the cavity (309) in the second direction (L) perpendicular to the first direction (H).
